# EUROPEAN PATENT APPLICATION

(11) **EP 3 588 036 A1**
(43) Date of publication of application: **01.01.2020**
(21) Application number: 18180075.6
(22) Date of filing: 27.06.2018
(51) Int. Cl.: G01K 11/18, G01K 3/04

(54) **SYSTEM HAVING A LAYER COMPRISING A THERMOCHROMIC MATERIAL**

(71) Applicant: Koninklijke Philips N.V., 5656 AE Eindhoven (NL)
(72) Inventor: Tang, Jiecong, 5656 AE Eindhoven (NL); Kahya, Orhan, 5656 AE Eindhoven (NL); Sankaran, Sivaramakrishnan, 5656 AE Eindhoven (NL); He, Tao, 5656 AE Eindhoven (NL)
(74) Representative: de Haan, Poul Erik

(57) **Abstract**

Provided is a system (100) having a surface (102). A mark (104) is arranged on the surface, which mark represents visual information. A layer (106) is disposed over the mark. The layer is heated by a heating element (103). The layer comprises a thermochromic material for changing the light absorption of the layer at a visible wavelength when the temperature of the layer exceeds a threshold temperature.

The layer is sufficiently optically transmissive (at or) above the threshold temperature that the visual information provided by the mark becomes visible.

## Description

### FIELD OF THE INVENTION

This invention relates to a system having a layer comprising a thermochromic material.

This invention may be used along with any system or apparatus comprising a heating element.

### BACKGROUND OF THE INVENTION

Various apparatuses, such as garment care products (for example steamers or steam irons), have surfaces which are heated by heating elements. Such surfaces may reach temperatures exceeding 100°C, and thus become too hot during use to touch safely. A particular danger exists after use, when the hot surface may have cooled to some degree, but not enough to be safe to touch. The user, or someone else, may not be aware that the surface is still at an unsafe temperature, and may suffer injury or discomfort by touching the hot surface.

In view of this problem, responding to a temperature change of a surface heated by a heating element by providing a visible warning when a surface has become too hot to touch safely has been achieved using a mark formed from a thermochromic material. The mark provides the information, e.g. the warning message or symbol, and the colour change of the thermochromic material emphasizes or reveals the information.

Such an approach is, however, not without difficulties. Forming such a mark on the surface tends to involve a printing process, e.g. a silk screen printing process, using a composition comprising particles of the thermochromic material. A relatively high resolution printed mark is desirable to convey the information, e.g. warning, as clearly as possible.

However, thermochromic pigment particles tend to be relatively large, i.e. relative to the apertures of conventional silk screens, which may lead to processing difficulties during printing, such as choking of the silk screen.

Such relatively large particles further mean that the resolution of the printed mark, and thus the clarity of the information being conveyed by the mark, may be compromised.

### SUMMARY OF THE INVENTION

It is an object of the invention to propose an improved system and apparatus that avoid or mitigate above-mentioned problems.

The invention is defined by the independent claims. The dependent claims define advantageous embodiments.

To this end, according to an aspect of the invention, there is provided a system comprising:
- a substrate comprising a surface;
- a mark arranged on the surface, said mark representing visual information;
- a layer disposed over the mark; and
- a heating element for heating the layer.

The layer comprises a thermochromic material adapted to change the light absorption of the layer such that the mark becomes visible when the temperature of the layer exceeds a threshold temperature.

The present invention is based upon the realization that a thermochromic material may be used to provide a visible response to a temperature change without requiring that the mark itself be formed from the thermochromic material. A mark, e.g. a warning message or symbol, is arranged on a surface. The mark can be formed, e.g. printed, in any suitable manner. The layer disposed over the mark comprises the thermochromic material, so that the layer provides a visual response to a change in temperature caused by the heating element heating the layer. When a threshold temperature is exceeded, the associated change in visible light absorption of the layer, i.e. at wavelengths between 390 and 700 nm, provides the visual response. This may, for instance, involve the layer changing colour, or the layer switching from being coloured below the threshold temperature to being colourless above the threshold temperature. The layer may, for instance, become transparent or semi-transparent, i.e. sufficiently optically transmissive in the visible light region to enable the information provided by the mark to be visually perceived through the layer.

The information provided by the mark is visually perceptible through the layer above the threshold temperature. The requirement for the mark to be formed, e.g. printed, using the thermochromic material is thus avoided.

Preferably, the thermochromic material is adapted to change the light absorption of the layer such that the mark is not visible when the threshold temperature is not exceeded.

Alternatively, the thermochromic material is adapted to change the light absorption of the layer such that the mark is partly visible when the threshold temperature is not exceeded.

In both cases, the information provided by the mark can be viewed through the layer above the threshold temperature. By also obscuring, e.g. completely obscuring, the mark below the threshold temperature, a more pronounced response to the change in temperature may be provided, i.e. due to a switch from the mark being visually imperceptible to being visually perceived through the layer when the threshold temperature is exceeded.

Preferably, the thermochromic material comprises a leuco dye.

The thermochromic material is adapted to reverse the change of the light absorption of the layer, i.e. which occurs above the threshold temperature, when the temperature of the layer falls below the threshold temperature. The thermochromic material may thus enable the layer to respond to repeated changes of the temperature to/above and below the threshold temperature.

Preferably, the threshold temperature is between 30°C and 70°C. Such a temperature range may be useful in terms of warning a user of the system that the temperature of the layer is too hot to touch safely. The threshold temperature may be, for example, about 65°C. On the other hand, a threshold temperature towards the lower end of this range, e.g. close to 30°C, may also permit the layer to signal when another part of the system which is in thermal contact with the layer is too hot to touch safely. In the latter case, the part of the system may be significantly hotter than the layer itself.

Preferably, the mark may comprise at least one of a text character, a symbol, a pictorial image and a pattern.

For example, the mark may spell out the word "HOT", and/or include an appropriate figurative warning to warn the user that the threshold temperature has been exceeded.

Preferably, the mark is directly disposed on the surface. In other words, there are no other layer(s) in-between the mark and the surface.

Preferably, the mark and the surface are coloured differently relative to each other, such as to provide a visual contrast between the mark and the surface when the threshold temperature is exceeded.

The mark may thus be easily visually perceived by a user of the system when the threshold temperature is exceeded.

Alternatively, a base layer is arranged between the substrate and the mark.

The base layer provides a suitable surface on which to apply, e.g. print, the mark. In such a scenario, the mark is arranged directly on the base layer.

Preferably, the base layer comprises a pigment and a binder.

The binder may, for example, be selected such that the mark adheres strongly to the base layer. In this respect, the binder may, for instance, include a (cured) sol-gel material and/or a polymer, such as Teflon.

Preferably, the mark and the base layer are coloured differently relative to each other, such as to provide a visual contrast between the mark and the base layer when the threshold temperature is exceeded.

This may be achieved by having the pigment of the base layer enabling a suitable degree of contrast with the mark. In other words, the respective pigments employed for the mark and the base layer may be selected to contrast with each other. In this manner, a visual contrast is provided between the mark and the base layer when the threshold temperature is exceeded.

Preferably, the substrate is formed from at least one of a metal material, a plastic material, a rubber and a ceramic. The material selected for the substrate may, for instance, depend on the particular application intended for the system.

Preferably, similarly as in the thermochromic material, the layer may further include a binder being at least one of a polymer and a (cured) sol-gel material.

The binder may further permit the layer to protect the mark and the surface beneath the mark, e.g. by providing abrasion resistance. Such abrasion resistance may be particularly useful when the surface is, for instance, on a soleplate of an iron or the cooking surface of a frying pan.

Preferably, the heating element is adapted to heat the substrate via direct thermal exchange or indirect thermal exchange.

Having the heating element in direct thermal exchange with the substrate allows having the layer to change its light absorption based on the temperature of the heating element itself. This may be advantageous for safety reasons linked to the temperature of the layer.

Having the heating element in indirect thermal exchange with the substrate allows having the layer to change its light absorption based on the temperature of a part of the system that is different from the heating element itself. This may be advantageous for safety reasons linked to the temperature of an apparatus implementing the system according to the invention.

According to a further aspect of the invention, there is provided an apparatus comprising the system as defined above.

Preferably, the apparatus corresponds to:
- a garment care device taken among any one of a steamer, a steam iron, a pressurized steam iron or a carpet cleaner; or
- a cooking device taken among any one of a kettle or an oven.

According to a further aspect of the invention, there is provided a method comprising the steps of:
- providing a mark on a surface of a substrate, the mark representing visual information;
- disposing a layer over the mark, the layer comprising a thermochromic material adapted to change the light absorption of the layer such that the mark becomes visible when the temperature of the layer exceeds a threshold temperature; and
- providing a heating element for heating the layer.

Preferably, the method may further comprise a step of providing a base layer onto the surface, wherein the step of providing the mark comprises providing the mark directly onto the base layer.

Preferably, the step of providing the mark comprises printing, stamping or spraying the mark onto the surface.

Preferably, the step of disposing includes disposing a mixture of a binder and said thermochromic material onto the mark.

The binder may act as a carrier for the thermochromic material and may further protect the mark from damage, e.g. by abrasion.

These and other aspects of the disclosure will be apparent from and elucidated with reference to the embodiment(s) described hereinafter.

### BRIEF DESCRIPTION OF THE DRAWINGS

Embodiments of the invention are described in more detail and by way of non-limiting examples with reference to the accompanying drawings, wherein:
FIG. 1A shows a cross-section of part of a system according to an embodiment of the invention, below a threshold temperature where a heating element is in direct thermal exchange with a substrate;
FIG. 1B shows a cross-section of part of a system according to an embodiment of the invention, above a threshold temperature;
FIG. 1C shows a cross-section of part of a system according to an embodiment of the invention, below a threshold temperature, where a heating element is in indirect thermal exchange with a substrate;
FIGs. 2A and 2B show a different, zoomed-out, views of the system shown in FIGs. 1A and 1B;
FIGs. 3A and 3B show a cross-section of part of a system according to another embodiment of the invention, below and above the threshold temperature, respectively;
FIG. 4 shows the front part of a garment steamer according to an embodiment of the invention;
FIG. 5 shows a top part of a garment steamer according to another embodiment of the invention; and
FIG. 6 shows a flowchart of a method according to the invention.

### DETAILED DESCRIPTION OF THE EMBODIMENTS

It should be understood that the detailed description and specific examples, while indicating exemplary embodiments of the apparatus, systems and methods, are intended for purposes of illustration only and are not intended to limit the scope of the invention. These and other features, aspects, and advantages of the apparatus, systems and methods of the present invention will become better understood from the following description, appended claims, and accompanying drawings. It should be understood that the Figures are merely schematic and are not drawn to scale. It should also be understood that the same reference numerals are used throughout the Figures to indicate the same or similar parts.

Provided is a system having a surface. A mark is arranged on the surface, which mark represents visual information. A layer is disposed over the mark. The layer is heated by a heating element. The layer comprises a thermochromic material for changing the light absorption of the layer at a visible wavelength when the temperature of the layer exceeds a threshold temperature. The layer is sufficiently optically transmissive (at or) above the threshold temperature that the visual information provided by the mark can be viewed through the layer.

The system may itself be an apparatus, or part of an apparatus, as will be explained in more detail herein below.

The term "visual" as used herein refers to what is perceptible to the healthy human eye, in daylight conditions, e.g. within a distance of 0 to 5 meters, or more from the system.

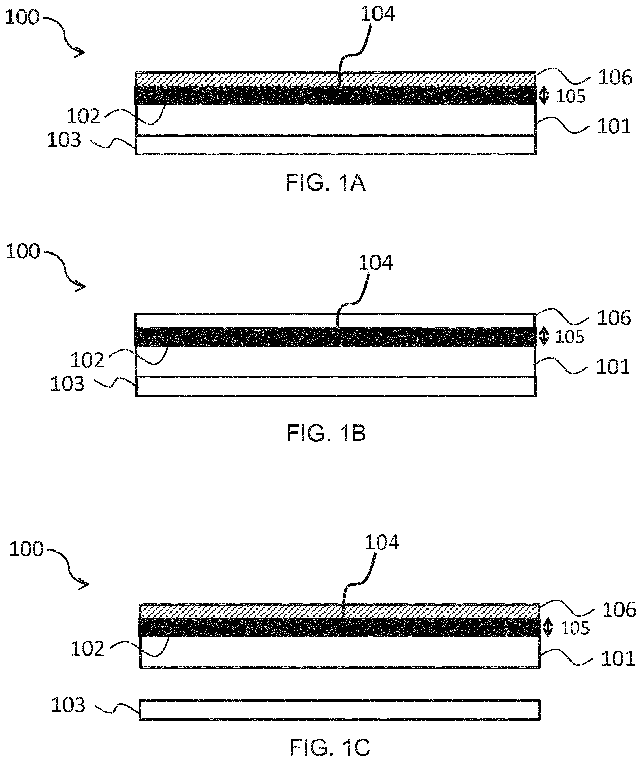

FIGs. 1A and 1B schematically depict a cross-section of a system 100 according to an embodiment of the invention. The system 100 comprises:
- a substrate 101 comprising a surface 102;
- a mark 104 arranged on the surface, said mark representing visual information;
- a layer 106 disposed over the mark; and
- a heating element 103 for heating the layer,

The layer comprises a thermochromic material adapted to change the light absorption of the layer such that the mark becomes visible when the temperature of the layer exceeds a threshold temperature.

The surface 102 is heated by a heating element 103. The heating element is adapted to heat (by conduction) the substrate via direct thermal exchange, for example by being in direct contact with each other.

FIG. 1C schematically depicts a cross-section of part of a system according to an embodiment of the invention. The system of FIG. 1C differs from that of FIG. 1A in that the heating element is in indirect thermal exchange with a substrate, for example by not being in direct contact with each other (e.g. via a layer of air in between as illustrated, or any other elements or parts in between). The heating element is thus adapted to heat (by conduction and/or convection) the substrate via indirect thermal exchange.

Any suitable design of heating element 103 may be used, providing the heating element 103 is able to supply heat the layer 106. The heating element 103 may, for instance, be a resistive heating element, and the heat generated by the heating element 103 may be transferred to the surface 102 by conduction. The resistive heating element may, for example, be adapted to heat water in a steam chamber (not shown) to generate steam. In other words, the heating element 103 can also define a steam generator comprising the resistive heating element, e.g. in an iron, steamer, and the like.

Alternatively, the heating element 103 may, for example, heat the surface 102 by magnetic induction, providing that the substrate 101 is made of a suitable material, such as iron. Such heating element designs are well-known per se, and will not be further described herein for the sake of brevity only.

The substrate 101 may be formed of any suitable material, such as a metal material, a plastic material, a rubber or a ceramic.

A suitable metal material may, for instance, be a metal, e.g. aluminium or iron. The metal material may alternatively be a metal alloy, such as steel.

An example of a suitable plastic material is Polypropylene. The material for the substrate 101 may be selected to withstand the temperatures resulting from heating by the heating element 103, as will readily be appreciated by the skilled person.

FIGs. 1A and 1B only show a portion of the surface 102 which is covered by the mark 104. The mark 104 is arranged on the surface 102 and is for visually communicating information to, for instance, a user of the system 100. In particular, the mark 104 may be a warning sign or symbol which alerts the user, or anyone who might come into contact with the system 100, that the system 100 is too hot to touch safely. In an embodiment, the mark 104 comprises at least one of a text character, a symbol, a pictorial image and a pattern. For example, the mark 104 may spell out the word "HOT", and/or include an appropriate figurative warning. Thus, the mark 104 may serve as a warning sign to protect a user of the system 100 from burns due to contact with hot surfaces.

Providing the mark 104 visually contrasts sufficiently with the surface 102, and any further layers between the surface 102 and the mark 104, any suitable thickness of the mark 104 may be contemplated. The term "thickness" in this context is intended to mean the average height 105 of the mark 104, as viewed in the cross-sectional representations of FIGs. 1A, 1B, 1C, 2A, 2B, 3A and 3B. The thickness may, for example, be in the range of 1 µm to 50 µm.

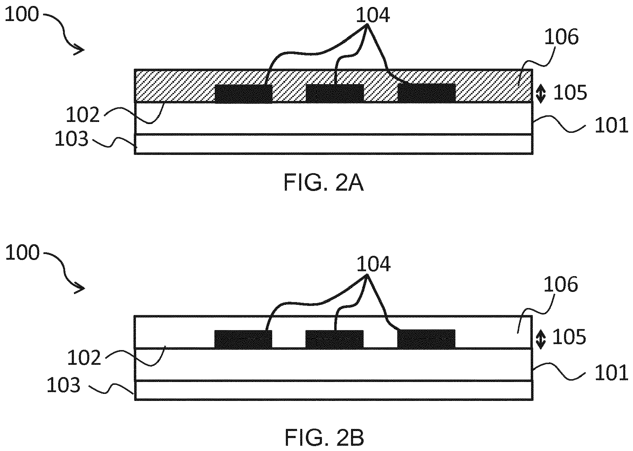

FIGs. 2A and 2B show the system shown in FIGs. 1A and 1B, but also show the parts of the surface 102 which are not covered by the mark 104. The term "mark" should be regarded as meaning that the mark 104 is suitably distinguishable from the surrounding parts of the surface 102, and any further layers which may be present between the surface 102 and the mark 104. In this respect, the mark 104 may be coloured and/or textured in a manner which contrasts with the colour and/or texture of the surface 102 or such further layers, if present. By this way, the mark 104 can be perceived by a user of the system 100 when the threshold temperature is exceeded. This contrast is schematically depicted in FIGs. 1A, 1B, 1C, 2A and 2B by the mark 104 being represented by solid black areas, whilst the substrate 101 is represented by a solid white area, which is free from any pattern. For the avoidance of doubt, the terms "colour" and "coloured" as used herein are not intended to exclude shades such as black, white, grey etc. The colour contrast described herein below may thus, for instance, be achieved using a black pigment for the mark 104 applied to a substrate 101 comprising a white pigment, or vice versa. Numerous alternative colour combinations are conceivable.

The mark 104 may be applied to the surface 102 of the substrate 101 by any suitable means, e.g. using printing techniques. Because the mark 104 is not itself required to undergo any colour change in response to temperature changes, the requirement for the mark 104 to include a thermochromic material, i.e. pigment, is obviated. Accordingly, pigments having smaller particle sizes compared to those of conventional thermochromic pigments may be utilised in the process of arranging the mark 104 onto the surface 102. This may mean that the resulting mark 104 may have a suitably high resolution so as to clearly convey the information, e.g. warning, to the user of the system 100. Moreover, the mark 104 may be disposed onto the surface 102 using a printing process, e.g. a silk screen printing process, with less risk of processing difficulties, such as choking of the silk screen, because relatively small particle size pigments may be used to form the mark 104.

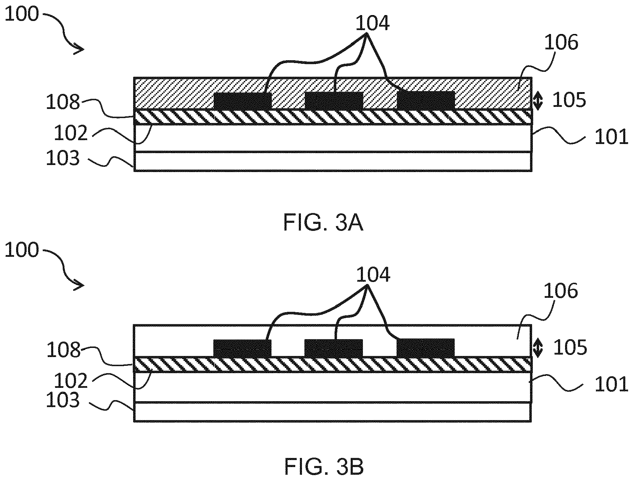

Whilst FIGs. 1A, 1B, 1C, 2A, 2B, 3A and 3B show the mark 104 being provided directly on the surface 102, this should not be regarded as being limiting. The mark 104 may alternatively be provided in the surface 102 (e.g. engraved). It should also be noted that the mark 104 need not be directly applied to the surface 102 of the substrate 101. Further layers may, for instance, be between the surface 102 and the mark 104. An example of this will be described with reference to FIGs. 3A and 3B below.

The mark 104 may, for instance, be printed, stamped, sprayed or spread onto the surface 102. Examples of suitable printing methods include screen printing, e.g. silk screen printing, ink jet printing, pad printing etc. Preferably, the mark 104 is applied by screen printing, in order that a high resolution mark 104 is provided. The mark 104 may, for instance, comprise suitable pigments, in order to provide the requisite contrast with the surrounding parts of the surface 102, and any further layers which may be present between the surface 102 and the mark 104. The pigments may also be selected such that they are thermally stable in the temperature operating range of the system 100. For example, such suitable pigments may include at least one of a black pigment, a red pigment and a blue pigment.

The pigments included in the mark 104 may, for instance, be transferred to the surface 102 in a printing paste. Such a printing paste may be used, for instance, in a screen printing process.

As well as the pigment(s), the printing paste may further comprise a binder precursor, such as a polymer or a (curable) sol-gel component. In a non-limiting example, the sol-gel component is prepared by pre-hydrolysing methylsilicate precursors using one or more of water, an alcohol (such as 2-Buthanol), and an acid (such as HCl). This pre-hydrolysis may, for instance, be carried out at room temperature for at least one hour, before the pigments are added to the sol-gel composition. A filler, such as a fumed silicate, may, for example, be additionally added to the composition. Thorough mixing of the paste may be carried out prior to printing. Numerous variations on the above-described paste preparation will be immediately apparent to the skilled person.

The printing paste may then be used to form the mark 104 on the surface 102, e.g. by screen printing. In such an example, the printed paste is preferably dried and cured, e.g. between 60°C and 150°C prior to disposing of the layer 106 over the mark 104.

The layer 106 is disposed over the mark 104. The layer 106 may be in thermal contact with the surface 102 such that the layer 106 may respond to any increase in temperature of the surface 102, i.e. as a result of the heating element 103 supplying heat to the surface 102.

In practice, the layer 106 is heated via the surface 102 by direct conduction of thermal energy from the surface 102 to the layer 106. It is noted that the mark 104 does not significantly affect the heat transfer from the surface 102 to the layer 106, including part of the layer covering the mark.

In case any further layers would be arranged between the surface 102 and the layer 106, those further layers conduct heat from the surface 102 to the layer 106.

The layer 106 provides the requisite visual response when the temperature exceeds the threshold temperature, which reveals or emphasizes the mark 104 (i.e. the mark itself and/or visual information of the mark).

To this end, the layer 106 comprises a thermochromic material which causes the light absorption of the layer 106 at a visible wavelength, i.e. at wavelengths between 390 and 700 nm, to change when a threshold temperature is exceeded. It is this change which reveals or emphasizes the mark 104. The mark 104 is visible through the layer 106 (at or) above the threshold temperature, thereby enabling the information, e.g. temperature warning information, to be relayed through the layer 106 so as to inform the user of the system 100 that parts of the system 100, e.g. the layer 106, may be too hot to touch safely.

Thermochromic materials are well-known per se, and any suitable thermochromic material may be employed in the layer 106. The thermochromic material may reverse the changing of the light absorption of the layer 106, i.e. when the threshold temperature is exceeded, when the temperature of the layer 106 falls below the threshold temperature. Thus the layer 106 may respond to cycling of the temperature above and below the threshold temperature. The mark 104, e.g. warning sign, may thus appear when the surface 102 is hot and may vanish when the surface 102 has cooled down to a safe value, e.g. 60°C or less.

Both organic and inorganic thermochromic pigments are known, and commercially available. The terms "thermochromic material" and "thermochromic pigment" are used interchangeably herein. Inorganic thermochromic pigments comprise, for instance, transition metal compounds, e.g. transition metal oxides such as titanium oxide and ferric oxide, or cadmium-based compounds. Organic thermochromic pigments include leuco dyes. Leuco dyes switch between two chemical forms, which changes the chromophore of the compound and causes a concomitant change in the light absorption of the material. One of the chemical forms may be colourless, i.e. absorbing light outside the visible region, and the other may be coloured, i.e. absorbing light within the visible region. The leuco dyes may, for example, include at least one of a spirolactone, a fluoran, a spiropyran, and a fulgide.

The thermochromic pigment may have any suitable particle size, such as in the range of 0.1 µm to 50 µm, preferably in the range of 0.5 µm to 10 µm.

In an embodiment, the thermochromic material includes a leuco dye. The thermochromic material may, for instance, take the form of microcapsules which encapsulate, i.e. seal inside, the leuco dye, and any further components required in order to assist the leuco dye to fulfil its colour-changing function. In this respect, the microcapsules may contain further components, such as a weak acid and a solvent, in addition to the leuco dye.

The selection of the thermochromic material may determine the temperature operating range of the system 100. Some thermochromic materials may, for instance, lose their thermochromic properties at temperatures in excess of 200°C. The temperature operating range of the system 100 employing such thermochromic materials may therefore be limited to, for example, between 0°C and 100°C. On the other hand, thermochromic materials which may withstand temperatures as high as 400°C are also known, so will not be further described here. Using such high temperature-stable thermochromic materials may enable the temperature operating range of the system 100 to correspondingly increase. Some of the high temperature-stable thermochromic materials may be usefully employed in the layer 106 when disposed on a soleplate of an iron, which may be exposed to temperatures which are higher than 200°C.

A suitable working temperature range for the system 100 may, for example, be 20°C to 150°C. A maximum working temperature of 150°C may enable a suitable longevity of the system 100, particularly due to the maximum working temperature of many currently available thermochromic pigments being around 150°C.

A selection may be made from the various thermochromic pigments which are currently available on the basis of the desired threshold temperature and/or the desired colour of the layer 106, below and above the threshold temperature. For example, the colour of the layer 106 below the threshold temperature may, as a result of the inclusion of the thermochromic material, be red, yellow, blue, black, green, orange, purple or brown.

In an embodiment, the thermochromic material may be selected such that the threshold temperature is between 30°C and 70°C. Such a temperature range may be useful in terms of warning a user of the system 100 that the temperature of the layer 106 is too hot to touch safely. The threshold temperature may be, for example, about 65°C.

A threshold temperature towards the upper end of this range, e.g. close to 70°C, may be for safety reasons, i.e. to prevent burns by direct contact with the layer 106.

On the other hand, a threshold temperature towards the lower end of this range, e.g. close to 30°C, may also permit the layer 106 to signal when another part of the system 100 which is in thermal contact with the layer 106 is too hot to touch safely. In the latter case, the part of the system 100 may be significantly hotter than the layer 106 itself.

The thermochromic change of the layer 106 may, for instance, be from coloured to colourless or vice versa, depending on the particular thermochromic material which is selected, and in view of the desired visual response of the layer 106. In an embodiment, the thermochromic material is selected such that the layer 106 becomes transparent or semi-transparent above the threshold temperature, and the mark 104 becomes visible through the layer 106.

In an embodiment, as well as the thermochromic material, the layer 106 includes a binder. The thermochromic material may thus be dispersed in the binder. The binder may, for instance, include a polymer, e.g. Teflon, and/or a (cured) sol-gel material. In other words, the polymer or cured sol-gel material may function as a carrier for the thermochromic pigment.

In a non-limiting example, the layer 106 may be prepared from a layer-forming composition obtained by adding sol-gel precursor(s), e.g. methyltrimethoxysilane, and hydrolysing the mixture with acid, e.g. HCl. The thermochromic pigment(s) may then be added to the hydrolysed mixture. Subsequent stirring, e.g. for 30 minutes, may ensure that the layer-forming composition is suitably homogeneous. Numerous variations on the above-described layer-forming composition preparation will be immediately apparent to the skilled person.

The layer 106 may then be formed by application of the layer-forming composition onto the mark 104 (and surface 102), e.g. by spreading, coating, spraying etc. In particular, the layer-forming composition may be sprayed onto the mark 104. Following application, the layer-forming composition may be dried, e.g. between 60°C and 120°C, and then cured at 150°C.

As will be readily apparent to the skilled person, the temperatures for the drying and the curing may be selected so as not to cause unwanted degradation of the thermochromic material. For example, conventional sol-gel curing temperatures, e.g. 300°C, may be incompatible with the thermochromic material, which may lose its thermochromic properties at such elevated temperatures. In this respect, the drying and curing temperature may be equal to or lower than the maximum working temperature of the thermochromic material. For example, a curing temperature between 150°C and 200°C may be used.

Such a sol-gel binder may mean that the layer 106 is thermally stable, as well as having good scratch and wear resistance. The layer 106 may thus, as well as fulfilling its thermochromic function, additionally serve to protect the surface 102 and the mark 104 from abrasive damage. The layer 106 may therefore be particularly suitable for application to, for instance, the surface 102 of a soleplate of an iron or a frying pan.

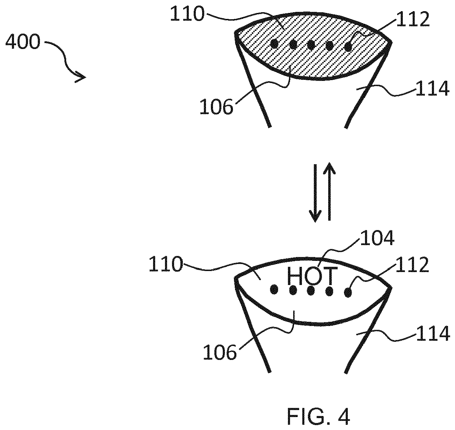

As will be explained further in relation to FIG. 4, when the surface 102 to which the layer 106 is to be applied tends to be exposed to lower temperatures during normal use than in the case of a soleplate and frying pan, a sol-gel carrier may not be required.

For example, in the case of an iron or steamer, the layer 106 may be applied on an area 114 of the plastic housing which is adjacent the heated plate 110. Such an area 114 may become hot during use, but nevertheless is exposed to lower temperatures than the heated plate 110 itself. In such a scenario, the mark 104 can be printed by screen printing, stamping or by otherwise transferring ink onto the area 114. The layer 106 may, for instance, be formed by dispersing the thermochromic pigment in a solvent, such as butyl acetate or ethyl acetate, and spraying the dispersion onto the area 114 on which the mark 104 has been printed.

The thickness of the layer 106 may depend on the light absorption properties of the layer 106, and in particular of the thermochromic material. When it is desired that the layer 106 should completely obscure the mark 104 below the threshold temperature, a suitably high extinction thermochromic material may be employed, along with a sufficiently high concentration of the thermochromic material in the layer 106. As will be immediately apparent to the skilled person, the layer 106 above the threshold temperature must still not absorb light to the extent that the mark 104 is not visible through the layer 106 above this temperature. The thickness of the layer 106 must also considered in this respect. A suitable thickness of the layer 106 may be, for instance, between 1 µm and 50 µm.

Since the mark 104 is underneath the layer 106, in some instances, e.g. in the case of a relatively thin layer 106, it may be necessary that the layer 106 and the mark 104 are of the same colour or fairly similar colour. In this case, the mark 104 may blend in with the layer 106 when the temperature is below the threshold temperature, and only be revealed when the light absorption of the layer 106 changes, e.g. becomes transparent, above the threshold temperature.

FIGs. 1A and 2A show the layer 106 below the threshold temperature. The light absorption of the layer 106 is such as to at least partially obscure the lark 104 (i.e. the mark 104 is not visible or partly visible) by the layer 106.

FIGs. 1B and 2B show the layer 106 above the threshold temperature. The light absorption of the layer 106 is such that the layer 106 permits the mark 104 to be visually perceived through the layer 106. Such a change may result in the layer 106 becoming transparent or at least semi-transparent so that the mark 104 may be viewed through the layer 106. The contrast between the mark 104 and the substrate 101 on which the mark 104 is directly applied in this case, means that the mark 104 can be properly perceived by the user of the system 100, as previously described.

Turning to FIGs. 3A and 3B, the system 100 further comprises a base layer 108 which is arranged between the substrate 101 and the mark 104. The mark 104 is suitably distinguishable from the surrounding parts of the base layer 108. In this respect, the mark 104 may be coloured and/or textured in a manner which contrasts with the colour and/or texture of the base layer 108. This is so that the mark 104 can be perceived by a user of the system 100 when the threshold temperature is exceeded, which is shown in FIG. 3B.

The contrast between the mark 104 and the base layer 108 is schematically depicted in FIGs. 3A and 3B by the mark 104 being represented by solid black areas, whilst the base layer 108 is represented by a cross-hatched area. The thickness of the base layer 108 is not particularly limited and may, for instance, be between 1 µm and 50 µm.

In an embodiment, the base layer 108 may comprise a pigment and a binder. The binder may, for instance, include a polymer and/or a cured sol-gel material. In other words, the polymer or cured sol-gel material may function as a carrier for the pigment of the base layer 108. Alternatively, the base layer 108 may not include a pigment, in which case the polymer and/or the cured sol-gel material may merely serve to provide a suitable surface on which to directly apply the mark 104.

In a non-limiting example, the base layer 108 may be prepared from a base layer-forming composition obtained by hydrolysing sol-gel precursor(s), such as metal alkoxides, e.g. methyltrimethoxysilane and tetraethylorthosilicate, with acid, e.g. maleic acid, HCl. Transparent or semi-transparent fillers, e.g. silica or alumina particles with a size range from 10 nm to 10 µm, may be added. Subsequently, one or more suitably thermally stable pigments may be added. Numerous variations on the above-described base layer-forming composition preparation will be immediately apparent to the skilled person.

The base layer-forming composition may then be applied to the surface 102 of the substrate 101, e.g. by spreading, coating, spraying etc. In particular, the base layer-forming composition may be sprayed onto the substrate 101. Prior to the application, the substrate 101 may, for instance, be subjected to a sandblasting pre-treatment. Following application, the layer-forming composition may be dried, e.g. between 60°C and 120°C, and then cured at 150°C.

As will be readily apparent to the skilled person, the temperatures for the drying and the curing may be selected so as not to cause unwanted degradation of the pigment which may be included in the base layer 108. The mark 104 and the layer 106 may be subsequently applied to the base layer 108, as described above.

Preferably, the heating element 103 is adapted to heat the substrate 101 via direct thermal exchange, as illustrated in FIG. 1A, or indirect thermal exchange, as illustrated in FIG. 1C.

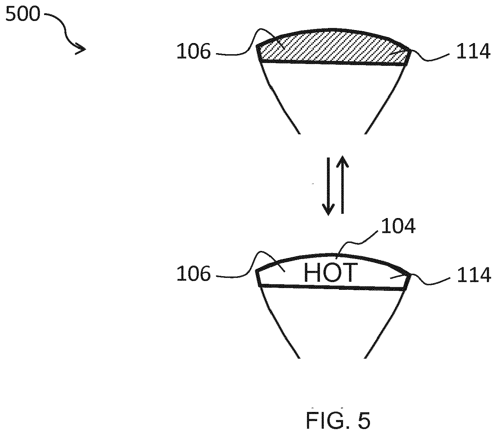

FIG. 4 shows the front part of a garment steamer 400 according to an embodiment of the invention, while FIG. 5 shows a top part of a garment steamer 500 according to another embodiment of the invention.

The garment steamer 400 and 500 comprise a heated plate 110, for treating garments. The heated plate 110 has holes 112 for allowing steam to exit the steamer 400. An area 114 of the plastic housing is located adjacent the heated plate 110.

In an embodiment, the system 100 is included in the apparatus 400, 500. The heating element 103 may, for instance, be integral to the apparatus 400, 500.

The apparatus 400, 500 may, for instance, be a garment care device or a cooking device having a substrate arranged to be heated by the heating element 103.

The garment care device may, for example, be a steamer, a steam iron, a pressurized steam iron or a carpet cleaner. In this case, the substrate 101 corresponds to heated plate 110 (i.e. soleplate) of the steamer, steam iron (not shown) or pressurized steam iron (not shown), or an area 114 of the housing receiving thermal heat from the heating element 103.

The cooking device may, for instance, be a kettle or an oven. In this case, the substrate 101 corresponds to an area 114 of the housing receiving thermal heat from the heating element 103.

The upper view of FIG. 4 shows the steamer 400 below the threshold temperature. The layer 106 is visible but the mark 104 beneath it is not. Upon exceeding the threshold temperature, however, the light absorption of the layer 106 changes, in this case such that the layer 106 becomes transparent or semi-transparent, and the mark 104 becomes (partly) visible.

The double-headed arrow shown in FIGs. 4 and 5 is intended to represent the reversibility of the colour change, as previously described.

The mark 104 in this case spells out the word "HOT", so as to provide the requisite visual warning. This is shown in the respective lower panes of FIGs. 4 and 5.

In this manner, the steamer 400 is able to warn the user when the heated plate 110 is too hot to touch safely. In the case of the steamer 400 shown in FIG. 4, a sol-gel derived composition of the type described previously may be particularly suitable for each of the mark 104 and the layer 106, in view of the elevated temperatures to which the mark 104 and the layer 106 may be exposed during use.

FIG. 5 shows that the mark 104 and the layer 106 may alternatively or additionally be applied to an area 114 of the (plastic) housing of a steamer 500. The area 114 is located remote/distant from the heated plate 110 in this particular example. This area 114 may not be heated directly by the heating element 103, but rather may become hot as a result of some conduction of heat from the heated plate 110 to this adjacent area 114 of the housing.

The area 114 may be used to warn when the temperature of the heated plate 110 has exceeded a safe limit, for example via visual information "HOT" of the mark 104. The threshold temperature of the layer 106 on area 114 may be lower than the threshold temperature for a layer disposed onto the heated plate 110 itself, such that the area 114 may be used to warn a user when the temperature of the heated plate 110, which may be significantly hotter than area 114 during use, is unsafe to touch.

In other words, the area 114 may be regarded as being indirectly heated by the heating element 103.

As previously described, the mark 104 may be printed by screen printing, stamping or by otherwise transferring ink onto the area 114. The layer 106 may be formed by dispersing the thermochromic pigment in a solvent, such as butyl acetate or ethyl acetate, and spraying the dispersion onto the area 114 on which the mark 104 has been printed.

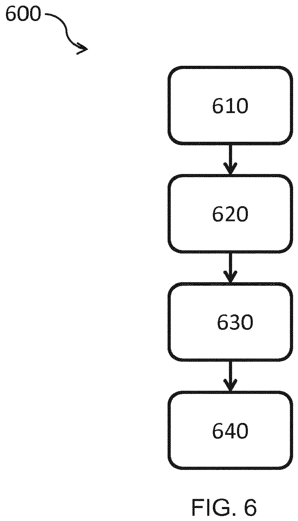

FIG. 6 shows a flowchart of a method 600 according to the invention. The method 600 comprises the step of:
- providing 620 a mark on a surface of a substrate, the mark representing visual information;
- disposing 630 a layer over the mark, the layer comprising a thermochromic material adapted to change the light absorption of the layer such that the mark becomes visible when the temperature of the layer exceeds a threshold temperature; and
- providing 640 a heating element for heating the layer.

Step 620 may, for instance, involve printing, stamping or spraying the mark onto the surface, as previously described.

In step 630, the layer is in thermal contact with the surface.

Step 630 may include disposing a mixture of a binder and the thermochromic material onto the mark. The layer comprises a thermochromic material which is adapted to change the light absorption of the layer when a threshold temperature is exceeded. The visual information is conveyed though the layer above the threshold temperature.

In step 640, a heating element is provided for heating the layer.

Preferably, the method further comprises the step of providing 610 a base layer onto the surface, wherein the step of providing 620 the mark comprises providing the mark directly onto the base layer. The colour and/or texture of the mark may contrast with the base layer such that the mark is visually perceptible above the threshold temperature, as previously described.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A system (100) comprising:
- a substrate (101) comprising a surface (102);
- a mark (104) arranged on the surface, said mark representing visual information;
- a layer (106) disposed over the mark; and
- a heating element (103) for heating the layer,
wherein the layer comprises a thermochromic material adapted to change the light absorption of the layer such that the mark becomes visible when the temperature of the layer exceeds a threshold temperature.

2. The system (100) according to claim 1, wherein the thermochromic material is adapted to change the light absorption of the layer (106) such that the mark (104) is not visible when the threshold temperature is not exceeded, or wherein the thermochromic material is adapted to change the light absorption of the layer such that the mark is partly visible when the threshold temperature is not exceeded.

3. The system (100) according to any one of the preceding claims, wherein the thermochromic material comprises a leuco dye.

4. The system (100) according to any one of the preceding claims, wherein the threshold temperature is between 30°C and 70°C.

5. The system (100) according to any one of the preceding claims, wherein the mark (104) comprises at least one of a text character, a symbol, a pictorial image and a pattern.

6. The system (100) according to any one of the preceding claims, wherein the mark (104) is directly arranged on the surface (102).

7. The system (100) according to claim 6, wherein the mark (104) and the surface (102) are coloured differently relative to each other, such as to provide a visual contrast between the mark and the surface when the threshold temperature is exceeded.

8. The system (100) according to any of claims 1 to 5, comprising a base layer (108) arranged between the substrate (101) and the mark (104).

9. The system (100) according to claim 8, wherein the mark (104) and the base layer (108) are coloured differently relative to each other, such as to provide a visual contrast between the mark and the base layer when the threshold temperature is exceeded.

10. The system (100) according to any one of the preceding claims, wherein the heating element (103) is adapted to heat the substrate (101) via direct thermal exchange or indirect thermal exchange.

11. An apparatus comprising a system (100) as claimed in any one of the preceding claims.

12. The apparatus according to claim 11, corresponding to:
- a garment care device taken among any one of a steamer (400, 500), a steam iron, a pressurized steam iron or a carpet cleaner; or
- a cooking device taken among any one of a kettle or an oven.

13. A method (600) comprising the steps of:
- providing (620) a mark on a surface of a substrate, the mark representing visual information;
- disposing (630) a layer over the mark, the layer comprising a thermochromic material adapted to change the light absorption of the layer such that the mark becomes visible when the temperature of the layer exceeds a threshold temperature; and
- providing (640) a heating element for heating the layer.

14. The method (600) according to claim 13, further comprising a step of providing (610) a base layer onto the surface, wherein the step of providing (620) the mark comprises providing the mark directly onto said base layer.

15. The method (600) according to claim 13 or claim 14, wherein the step of disposing (630) a layer includes disposing a mixture of a binder and said thermochromic material onto the mark.
